# EUROPÄISCHE PATENTANMELDUNG

(11) **EP 2 209 258 A1**
(43) Veröffentlichungstag der Anmeldung: **21.07.2010**
(21) Anmeldenummer: 09150889.5
(22) Anmeldetag: 20.01.2009
(51) Int. Cl.: H04L 12/26

(54) **Verfahren zum Betreiben eines Kommunikationsnetzwerkes und Kommunikationsgerät**

(71) Anmelder: Siemens Aktiengesellschaft, 80333 München (DE)
(72) Erfinder: Barthel, Herbert, 91074, Herzogenaurach (DE); Mattes, Rainer, 54349, Trittenheim (DE); Walter, Markus, 96050, Bamberg (DE); Gebuhr, Harald, 90409, Nürnberg (DE)

(57) **Zusammenfassung**

Um eine Sicherheitsreaktionszeit eines Kommunikationsnetzwerkes auszulösen, wobei Daten zwischen einem ersten Kommunikationsgerät (1) und einem zweiten Kommunikationsgerät (2) ausgetauscht werden, werden folgende Schritte vorgeschlagen:
i) Absenden eines Telegramms (3) von dem zweiten Kommunikationsteilnehmer (2) zu dem ersten Kommunikationsteilnehmer (1),
ii) Überwachen einer Zeitdauer einer Reaktionszeit (6a), wobei die Reaktionszeit (6a) eine Zeitdauer zwischen dem Absenden des Telegramms (3) und einem Eintreffen einer Antwort (4) auf das Telegramm (3) beschreibt,
iii) Vergleichen, ob die abgelaufene Zeitdauer vom Zeitpunkt des Sendens größer ist als eine vorgebbare Maximallaufzeit (7) des Zeitzählers (5), wobei abhängig vom Ergebnis eine Kommunikationsstörung (30)gemeldet wird,

wobei in Abhängigkeit eines Betriebszustandes des ersten Kommunikationsteilnehmers (1) für die Maximallaufzeit (7) ein erster Zeitwert (T01) oder ein zweiter Zeitwert (T02) vorgegeben wird.

## Beschreibung

Verfahren zum Betreiben eines Kommunikationsnetzwerkes und Kommunikationsgerät

Die Erfindung betrifft ein Verfahren zum Betreiben eines Kommunikationsnetzwerkes, wobei Daten zwischen einem ersten Kommunikationsgerät und einem zweiten Kommunikationsgerät ausgetauscht werden, mit folgenden Verfahrensschritten:
i) Absenden eines Telegrammes von dem zweiten Kommunikationsteilnehmer zu dem ersten Kommunikationsteilnehmer,
ii) Überwachen einer Zeitdauer einer Reaktionszeit , wobei die Reaktionszeit eine Zeitdauer zwischen dem Absenden des Telegrammes und einem Eintreffen einer Antwort auf das Telegramm beschreibt,
iii) Vergleichen, ob die abgelaufene Zeitdauer vom Zeitpunkt des Absenden des Telegrammes größer ist als eine vorgebbare Maximallaufzeit des Zeitzählers, wobei abhängig vom Ergebnis eine Störungsmeldung erzeugt wird.

Des Weiteren betrifft die Erfindung ein Kommunikationsgerät nach dem Oberbegriff des unabhängigen Vorrichtungsanspruches 7 zum Ausführen des genannten Verfahrens.

Bei Rechnersystemen, Computernetzwerken, allgemein Datenverarbeitungsanlagen muss zum Datenaustausch mittels bestimmter Protokolle für den Betrieb des die Datenkomponenten vernetzenden Kommunikationsnetzwerkes ein Protokoll vorhanden sein. Dieses Protokoll ist mit einer Überwachungsfunktionalität ausgestattet, so dass ein Betreiber eines solchen Netzwerkes erkennen kann, ob auf eine von einem ersten Kommunikationsgerät ausgesendete Anfrage an ein zweites Kommunikationsgerät mit einer Antwort in einer angemessenen Zeit auf die Anfrage geantwortet wird. Diese Antwort dient auch als Quittungssignal für die von dem ersten Kommunikationsgerät gestellte Anfrage, denn wird nicht mit einer Antwort bzw. einer Quittung in einer vorgeschriebenen Zeitdauer geantwortet, so kann dies ein Hinweis darauf sein, dass das zweite Kommunikationsgerät defekt ist oder gar nicht vorhanden ist, da die Kommunikation unterbrochen ist oder überlastet ist.

Insbesondere in sicherheitsgerichteten Systemen, beispielsweise zur Verwendung in der Prozessautomatisierung, darf eine maximale Reaktionszeit nicht überschritten werden. Für Meldungen von einem Chemiekessel aus einem zu steuernden chemischen Prozess, dürfen beispielsweise nur 500 msec vergehen, um beispielsweise eine Übertemperatur des Kessels zu melden und innerhalb dieser 500 msec den zu dem Kessel zugehörigen Brenner abzuschalten. Eine maximale Laufzeit einer sicherheitsgerichteten Kommunikation ist ein wesentlicher Faktor, der zur Garantierung der Reaktionszeit einer Sicherheitsfunktion beiträgt.

Als Definition der Reaktionszeit einer Sicherheitsfunktion offenbart die Norm IEC61784-3: Die Reaktionszeit einer Sicherheitsfunktion ist die im ungünstigsten Fall benötigte Zeitdauer nach Aktivierung eines am Feldbus angeschlossenen Sicherheitssensors (z.B. Taster, Drucktransmitter, Lichtgitter) bis der zugehörige sichere Zustand des Sicherheitsaktuators (z.B. Relais, Ventil, Antrieb) erreicht wurde unter Berücksichtigung von gleichzeitig auftretenden Fehlern und Ausfällen im Übertragungskanal der Sicherheitsfunktion. Eine typische Zusammensetzung für eine Signalkette, die die Reaktionszeit einer Sicherheitsfunktion beeinflussen, ist ausgehend von einem Automatisierungsgerät, eine Signalerfassung, eine sichere Übertragung, eine Logikverknüpfung, eine sichere Übertragung, eine Signalausgabe und Leistungsausgang, welcher beispielsweise einen Industrieroboter, oder eine Dosiereinheit für einen chemischen Prozess ansteuert.

Da heutige Prozessleitsysteme, beispielsweise eine Zusammenfassung von Automatisierungskomponenten zur Steuerung eines industriellen Prozesses, eine Funktion einer Konfigurationsänderung der Projektierung der Automatisierungskomponenten im Laufzeitbetrieb unterstützen, ist eine derartige Konfigurationsänderung ein Ereignis, welches Einfluss auf die Reaktionszeit nehmen kann. Denn während diese Konfigurationsänderung im Prozessleitsystem oder in der Prozesssteuerung wirksam wird, muss beispielsweise eine Aktualisierung von Prozessdaten vorübergehend angehalten werden, bis diese Konfigurationsänderung abgeschlossen ist.

Auch für den Fall, dass Prozessleitsysteme oder Prozesssteuerungen hoch verfügbar ausgeführt sind, d.h. es existiert eine Prozessoreinheit mit einer ersten CPU und einer zweiten CPU, welche hoch verfügbar im Parallelbetrieb arbeiten kann es ein Ereignis geben, welches die Reaktionszeit beeinflusst. Muss eine CPU eines solchen hochverfügbaren Prozessleitsystems, beispielsweise wegen Reparatur ausgetauscht werden, so muss sie nach ihrer Reparatur wieder aufgedatet werden. Damit wird sie auf den gleichen Datenzustand gebracht wie die noch laufende CPU. Auch hier wird während eines Betriebsvorganges "Aufdaten" die Aktualisierung der Prozessdaten für eine gewisse Zeitdauer angehalten.

Unter Aufdaten einer CPU ist hier zu verstehen, dass der Datenbestand einer laufenden CPU auf die einer angekoppelten CPU upgedatet wird.

Bei, für den Fachmann bekannten, Kommunikations-Timeouts werden zur Überwachung bei heutigen Verfahren zum Betrieb von Kommunikationsnetzwerken für den Datenaustausch oder bei heutigen Kommunikationsgeräten relativ große Überwachungszeiten (2 bis 6 Sekunden) eingestellt, um bestimmte Betriebszustände von mit Steuerungsaufgaben betrauten Automatisierungsgeräten, ohne eine Kommunikationsstörmeldung zu überstehen. Diese bestimmten Betriebszustände sind beispielsweise das genannte Aufdaten, eine Änderung der Konfiguration der Automatisierungsanlage zur Laufzeit, oder eine besondere große Prozessauslastung wie beispielsweise ein Meldeschwall oder ein eingeschwungener Zustand bei dem eine geringe Prozessauslastung herrscht.

Diese fest eingestellten relativ langen Überwachungszeiten wirken sich negativ auf die garantierte Reaktionszeit einer Sicherheitsfunktion aus. Nachteilig an den bisher bekannten Lösungen ist es, wenn beispielsweise eine Kommunikationsstörung oder eine Verzögerung in einer Automatisierungskomponente auftritt, kann diese erst relativ spät erkannt werden, so dass diese Störung vorliegt aber nicht sofort auf sie reagiert werden kann.

Es ist daher die Aufgabe der Erfindung, ein Verfahren anzugeben, durch welches eine Verbesserung der Sicherheitsreaktionszeit ermöglicht wird.

Für das eingangs genannte Verfahren wird diese Aufgabe dadurch gelöst, dass in Abhängigkeit eines Betriebszustandes des ersten Kommunikationsteilnehmers für die Maximallaufzeit ein erster Zeitwert oder ein zweiter Zeitwert vorgegeben wird. Befindet sich das erste Kommunikationsgerät beispielsweise in einem Betriebszustand in dem es momentan nicht stark ausgelastet ist oder in einer Art Nachtbetrieb für die Regelung einer Kesseltemperatur, bei der es keine kritischen Verfahrensschritte gibt, so kann für den momentan vorherrschenden Betriebszustand ein zweiter Zeitwert gewählt werden, welcher in der Regel größer ist als der erste Zeitwert.

In einer bevorzugten Ausgestaltung der Erfindung ist es vorteilhaft, wenn in einem ersten Betriebszustand der erste Zeitwert vorgegeben wird und in einem zweiten Betriebszustand der zweite Zeitwert vorgegeben wird, wobei der zweite Betriebszustand vorhersehbar ist. In der Prozessautomatisierung sind beispielsweise diejenigen Ereignisse, die die größten Prozess-Reaktionsverzögerungen hervorrufen, wie beispielsweise ein Wiedereingliedern einer reparierten Komponente, eine Konfigurationsänderung zur Laufzeit, bezüglich ihres Eintrittzeitpunktes beeinflussbar. Auch in Bezug auf eine Häufigkeit pro Zeiteinheit sind die Ereignisse beeinflussbar. So kann beispielsweise die Vorgabe gemacht werden einen Betriebsvorgang, wie das Aufdaten, nur einmal pro Tag zuzulassen. Es kann beispielsweise für einen Normalbetrieb, wobei unter Normalbetrieb ein gleichmäßiger Betrieb der Anlage ohne eintretende Ereignisse, welche die Reaktionszeit verlängern, zu verstehen ist, mit einem kurzen Überwachungszeitwert gearbeitet werden. Dieser kurze Überwachungszeitwert wird durch den ersten Zeitwert eingestellt und die Kommunikation zwischen den Kommunikationsteilnehmern wird betrieben. Für Betriebszustände, bei welchen das erste Kommunikationsgerät stark belastet wird und damit eine zeitliche Unterbrechung einer Prozessbildaktualisierung droht, kann der zweite Zeitwert vorgegeben werden, welcher größer ist als der erste Zeitwert. Der erste Kommunikationsteilnehmer kann beispielsweise eine einen Prozess steuernde SPS sein.

In weiterer Ausgestaltung des Verfahrens ist es vorteilhaft, dass vor Eintreten des zweiten Betriebszustandes ein Anforderungssignal erzeugt wird, welches den Kommunikationsteilnehmern mitteilt, dass in Kürze eine Kommunikationsverzögerung zu erwarten ist und somit für die Maximalzeit der zweite Zeitwert vorgegeben wird, wobei der zweite Zeitwert länger ist als der erste Zeitwert.

Dieses Anforderungssignal könnte beispielsweise über das Kommunikationsnetzwerk, beispielsweise einem Feldbus, allen an diesem Feldbus angeschlossenen Kommunikationsteilnehmern mitgeteilt werden, welche sich durch beispielsweise in ihrer Firmware realisierten Protokoll-Stack auf die zu erwartende Kommunikationsverzögerung einstellen und somit für ihre Überwachungszeit den zweiten Zeitwert wählen.

Weiterhin ist es vorteilhaft, wenn überwacht wird, dass die Maximallaufzeit für den zweiten Betriebszustand nur eine vorgebbare Anzahl von Wiederholungen der Überschreitung des ersten Zeitwertes pro einmaliger Aktivierung der Vorgabe des zweiten Zeitwertes annehmen kann. Die Nutzung einer verlängerten Maximalzeit auf Grundlage des zweiten Zeitwertes kann sicherheitstechnisch überwacht werden. Eine Kommunikationszeitverzögerung sollte demnach nur ein einziges Mal bzw. maximal einer vorgebbaren Zahl von Wiederholungen auftreten dürfen. Bei Überschreitung der Anzahl von Wiederholungen wird eine Funktion ausgelöst, welche Sicherheitsmaßnahmen veranlassen.

Der zweite Zeitwert kann entweder parametriert werden oder automatisch aus den Systeminformationen zur Laufzeit des ersten Kommunikationsgeräts ermittelt werden.

Vorrichtungsgemäß wird die eingangs genannte Aufgabe durch das eingangs genannte Kommunikationsgerät dadurch gelöst, dass das Kommunikationsgerät ein Zuweisungsmittel aufweist, welches in Abhängigkeit eines Anforderungssignals dem Speichermittel entweder einen ersten Zeitwert oder einem zweiten Zeitwert zuweist. Mit dem Zuweisungsmittel verfügt das Kommunikationsgerät nun über eine Überwachungsfunktionsumschaltung zur Erreichung einer minimalen Sicherheitsreaktionszeit.

Weiterhin ist es vorteilhaft, wenn das Kommunikationsgerät mit Prognosemitteln zur Prognose eines Wechsels von einem ersten Betriebszustand in einen zweiten Betriebszustand ausgestaltet ist mit diesen Prognosemitteln ist es weiterhin vorteilhaft, ein Anforderungssignal zu erzeugen.

Die bereits erwähnten Überwachungsmittel sind vorteilhafter Weise weiterhin dazu ausgestaltet, dass die Zuweisung des zweiten Zeitwertes eine aufeinanderfolgende Anzahl von Wiederholungen nicht überschreitet.

Weiterhin ist es vorteilhaft, wenn derartige Kommunikationsgeräte Ermittlungsmittel umfassen, welche dazu ausgestaltet sind den zweiten Zeitwert anhand von Systeminformationen zu errechnen.

Weitere Vorteile und Ausgestaltungsmerkmale werden anhand der Zeichnung erläutert. Es zeigen:
- FIG 1: einen ersten Kommunikationsteilnehmer und einen zweiten Kommunikationsteilnehmer verbunden über ei- nen Feldbus und
- FIG 2: ein zeitliches Ablaufdiagramm zur Veranschaulichung der Verlängerung der Maximallaufzeit.

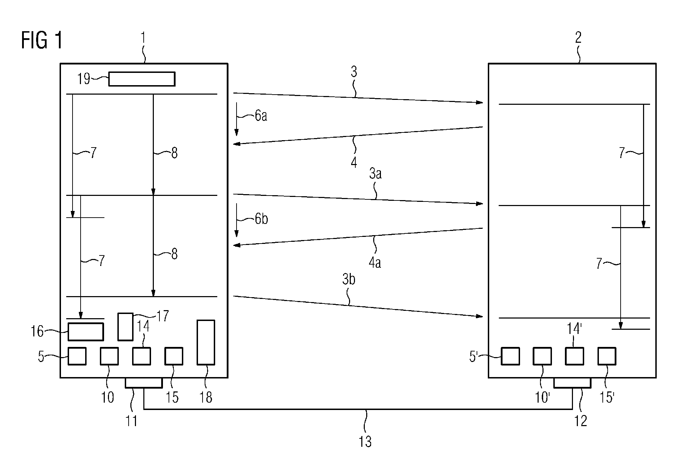

Gemäß FIG 1 ist ein erstes Kommunikationsgerät 1 über einen Feldbus 13 mit einem zweiten Kommunikationsgerät 2 verbunden. Der Feldbus 13 stellt in diesem Beispiel ausschnittsweise ein Kommunikationsnetzwerk dar. Um Daten zwischen dem ersten Kommunikationsgerät 1 und dem zweiten Kommunikationsgerät 2 auszutauschen, sendet das zweite Kommunikationsgerät 2 ein Telegramm 3 zu dem ersten Kommunikationsgerät 1. Das erste Kommunikationsgerät 1 und das zweite Kommunikationsgerät 2 werden auch als erster Kommunikationsteilnehmer und zweiter Kommunikationsteilnehmer bezeichnet.

Ist das Telegramm 3 beim ersten Kommunikationsteilnehmer eingetroffen, so antwortet der erste Kommunikationsteilnehmer mit einer Antwort 4, welche er zum zweiten Kommunikationsteilnehmer sendet.

Beim Aussenden des Telegramms 3 wird im zweiten Kommunikationsteilnehmer 2, ein Zeitzähler 5 gestartet, mittels eines Überwachungsmittels 16' wird eine erste Reaktionszeit 6a überwacht, wobei die Reaktionszeit 6a eine Zeitdauer zwischen dem Absenden des Telegramms 3 und dem Eintreffen der Antwort 4 auf das Telegramm 3 beschreibt. Parallel dazu wird mittels des Überwachungsmittels 16' die abgelaufene Zeitdauer für die Reaktionszeit 6a mit der maximal vorgegebenen Maximallaufzeit 7 verglichen. Abhängig von diesem Ergebnis wird eine Kommunikationsstörung gemeldet.

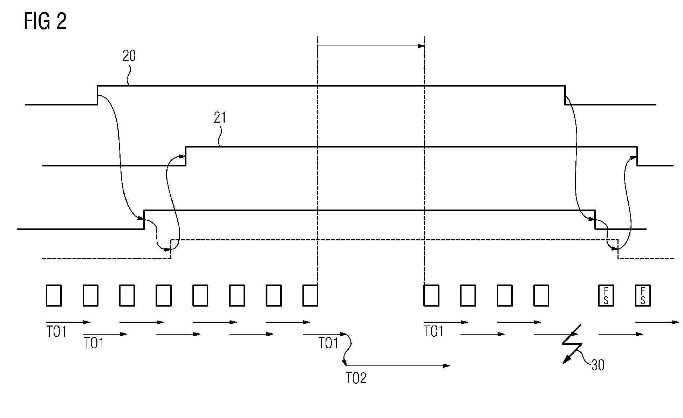

Für den Fall, dass der erste Kommunikationsteilnehmer aufgrund seines Betriebszustandes oder wegen externer Prozesszustände eine verlängerte Zeitspanne benötigt um auf das Telegramm zu antworten und in einem unkritischen Betriebszustand keine unnötige Störmeldung auszulösen, wird, in Abhängigkeit eines Anforderungssignals 20 (siehe FIG 2), dieser Signalzustand über die vorhandenen Kommunikationsmittel der Zustand des Anforderungssignals 20 vom Kommunikationsteilnehmer 1 zum Kommunikationsteilnehmer 2 übermittelt und im Kommunikationsteilnehmer 2 über ein Zuweisungsmittel 17' dem Speichermittel 5' entweder der erste Zeitwert T01 oder der zweite Zeitwert T02 zugewiesen.

Eine Zykluszeit 8 symbolisiert die Laufzeit für die Abarbeitung eines zyklisch abgearbeiteten Steuerungsprogramms.

Der zweite Kommunikationsteilnehmer ist beispielsweise als ein DP-Slave ausgestaltet.

Der erste Kommunikationsteilnehmer ist dabei als eine speicherprogrammierbare Steuerung ausgestaltet und repräsentiert die Kommunikation eines fehlersicheren Host, wobei der DP-Slave ein fehlersicheres F-Output Device ist. Analog zu den bereits genannten Mitteln zur Überwachung, Speicherung, Senden, Empfangen ist der erste Kommunikationsteilnehmer ebenfalls mit einem Zeitzähler 5, einem Speichermittel 10, einem Sendemittel 14, einem Empfangsmittel 15, einem Zuweisungsmittel 17 und einem Überwachungsmittel 16 ausgestaltet. Insoweit ähneln sich der erste Kommunikationsteilnehmer und der zweite Kommunikationsteilnehmer in ihrem Aufbau, wobei in der FIG 1 die entsprechenden Komponenten jeweils mit einem Strich am Bezugszeichen versehen sind. Da der erste Kommunikationsteilnehmer die Funktion eines Host übernimmt ist er weiterführend mit einem Prognosemittel 18 und einem Ermittlungsmittel 19 ausgestaltet. Das Ermittlungsmittel 19 ist dazu ausgestaltet, einen zweiten Zeitwert aus Systeminformationen des ersten Kommunikationsteilnehmers zu errechnen. Weiterhin weist der erste Kommunikationsteilnehmer Prognosemittel 18 zur Prognose eines Wechsels von einem ersten Betriebszustand in einen zweiten Betriebszustand auf. Mit diesem Prognosemittel 18 ist das Anforderungssignal 20 (siehe FIG 2) erzeugbar.

Gemäß FIG 2 ist der zeitliche Verlauf des Anforderungssignals 20 und der daraus abgeleiteten Signale ersichtlich. Das in dem ersten Kommunikationsteilnehmer erzeugte Anforderungssignal 20 hat zur Folge, dass in dem ersten Kommunikationsteilnehmer ein Mitteilungssignal 22 erzeugt wird und über die Schnittstelle 11 auf den Feldbus 13 gegeben wird und zum zweiten Kommunikationsteilnehmer übertragen wird. Hat der zweite Kommunikationsteilnehmer das Mitteilungssignal 22 empfangen und ist er bereit darauf zu reagieren, so antwortet der zweite Kommunikationsteilnehmer mit einem Quittungssignal 23. Das Quittungssignal 23 wiederum löst ein Freigabesignal 21 aus. Das Freigabesignal 21 wird wiederum über die Schnittstelle auf den Feldbus 13 geschaltet und sorgt dafür, dass im zweiten Kommunikationsteilnehmer ein Merker gesetzt wird, welcher einem Status entspricht, dass der zweite Kommunikationsteilnehmer jetzt mit einer verlängerten Überwachungszeit arbeiten darf. Es wird also im zweiten Kommunikationsteilnehmer aufgrund des Freigabesignals 21 in dem Speichermittel 10' der Zeitwert von T01 auf T02 geändert. Der verlängerte Zeitwert T02 ergibt sich aus der Summe des ersten Zeitwertes T01 zuzüglich einer Zusatzzeit TZ.

Da der Merker in den zweiten Kommunikationsteilnehmer gesetzt ist, darf es jetzt zu einer Verzögerungszeit 31 im Kommunikationsablauf kommen.

Diese Verzögerungszeit 31 tritt beispielsweise ein, wenn bei dem ersten Kommunikationsteilnehmer eine Konfigurationsänderung durchgeführt werden muss. Für den Fall das es sich bei dem ersten Kommunikationsteilnehmer um eine speicherprogrammierbare Steuerung handelt, könnte ein sogenanntes "Configuration Change in Run-Time" auftreten, d.h. der speicherprogrammierbaren Steuerung wird zur Laufzeit eine veränderte Konfiguration eingespielt. Da damit die speicherprogrammierbare Steuerung mehr belastet wird, kann sie nicht mehr wie gewohnt auf eingehende Telegramme in einer garantierten Zeit antworten. Darum wird für solche Fälle ein Zeitwert für eine Überwachungszeit verlängert.

Diese Verlängerung von Überwachungszeiten wird vorzugsweise nur für unkritische Betriebszustände durchgeführt, beispielsweise für einen eingeschwungenen Zustand der Anlage oder wenn der Betreiber der Anlage sagen kann, dass es für die nächste Zeit unwahrscheinlich ist, dass unvorhersehbaren Ereignisse auftreten werden.

Wird das Anforderungssignal 20 wieder zurückgenommen, welches durch eine fallende Flanke angedeutet ist, so fällt auch die Flanke von dem Mitteilungssignal 22, welches wiederum zur Folge hat, dass das Quittungssignal 23 im zweiten Kommunikationsteilnehmer zurückgeht und damit der Merker für die Bereitschaft zur verlängerten Reaktionszeit im zweiten Kommunikationsteilnehmer zurückgenommen wird. Da das Quittungssignal 23 mit negativer Flanke zurückgenommen wird, wird auch zeitverzögert das Freigabesignal 21 zurückgenommen.

Da die Freigabe für eine einmalige verzögerte Reaktionszeit im Bild 2/2 gewählt wurde, würde eine Kommunikationsstörung 30 zur Folge haben, dass der zweite Kommunikationsteilnehmer, welcher als ein Output-Device konfiguriert ist, für seine Ausgabewerte zur anstelle der Prozesswerte die sicheren Ersatzwerte FV (Failsafe-Values) eingetragen werden.

## Patentansprüche

1. Verfahren zum Betreiben eines Kommunikationsnetzwerkes, wobei Daten zwischen einem ersten Kommunikationsgerät (1) und einem zweiten Kommunikationsgerät (2) ausgetauscht werden, mit folgenden Verfahrensschritten:
i) Absenden eines Telegramms (3) von dem zweiten Kommunikationsteilnehmer (2) zu dem ersten Kommunikationsteilnehmer (1),
ii) Überwachen einer Zeitdauer einer Reaktionszeit (6a), wobei die Reaktionszeit (6a) eine Zeitdauer zwischen dem Absenden des Telegramms (3) und einem Eintreffen einer Antwort (4) auf das Telegramm (3) beschreibt,
iii) Vergleichen, ob die abgelaufene Zeitdauer vom Zeitpunkt des Sendens größer ist als eine vorgebbare Maximallaufzeit (7), wobei bei einem Überschreiten der der Maximallaufzeit (7) eine Störmeldung erzeugt wird,
**dadurch gekennzeichnet, dass** in Abhängigkeit eines Betriebszustandes des ersten Kommunikationsteilnehmers (1) für die Maximallaufzeit (7) ein erster Zeitwert (T01) oder ein zweiter Zeitwert (T02) vorgegeben wird.

2. Verfahren nach Anspruch 1, wobei in einem ersten Betriebszustand der erste Zeitwert (T01) vorgegeben wird, und in einem zweiten Betriebszustand der zweite Zeitwert (T02) vorgegeben wird, wobei der zweite Betriebszustand vorhersehbar ist.

3. Verfahren nach Anspruch 1 oder 2, wobei vor Eintreten des zweiten Betriebszustandes ein Anforderungssignal (20) erzeugt wird, welches dem zweiten Kommunikationsteilnehmern (2) mitteilt, das in Kürze eine Kommunikationsverzögerung zu erwarten ist, und somit für die Maximallaufzeit (7) der zweite Zeitwert (T02) vorgegeben wird, wobei der zweite Zeitwert (T02) größer ist als der erste Zeitwert (T01).

4. Verfahren nach einem der Ansprüche 1 bis 3, wobei überwacht wird, dass die Maximallaufzeit (7) für den zweiten Betriebszustand nur eine vorgebbare Anzahl von Wiederholungen der Überscheitung des ersten Zeitwertes (T01) pro einmaliger Aktivierung, der Vorgabe des zweiten Zeitwertes (T02), annimmt.

5. Verfahren nach Anspruch 4, wobei bei Überschreitung der Anzahl von Wiederholungen der Überscheitung des ersten Zeitwertes (T01) die Sicherheitsfunktion ausgelöst wird, welche Sicherheitsmaßnahmen veranlasst.

6. Verfahren nach einem der Ansprüche 1 bis 6, wobei der zweite Zeitwert (T02) parametriert wird oder automatisch aus den Systeminformationen zur Laufzeit des ersten Kommunikationsgerätes (1) ermittelt wird.

7. Kommunikationsgerät (1,2), umfassend
- eine Schnittstelle (11,12) zum Anschluss an ein Kommunikationsnetzwerk (13),
- Sendemittel (14, 14') zum Aussenden eines Telegramms (3) über die Schnittstelle (11, 12),
- ein Empfangsmittel (15, 15') zum Empfangen einer Antwort (4) auf das Telegramm (3),
- einen Zeitzähler (5),
- ein Überwachungsmittel (16, 16') zum Überwachen einer Reaktionszeit (6a),
wobei die Reaktionszeit (6a) eine Zeitdauer zwischen dem Absenden des Telegramms (3) und einem Eintreffen einer Antwort (4) auf das Telegramm (3) ist und wenn eine ermittelte Zeitdauer der Reaktionszeit (6a) größer als eine in einem Speichermittel hinterlegbare Maximallaufzeit (7) ist durch das Überwachungsmittel (16,16') eine Störmeldung (30) erzeugbar, **gekennzeichnet durch** Zuweisungsmittel (17), welche in Abhängigkeit eines Anforderungssignals (20) dem Speichermittel (5,5') entweder einen ersten Zeitwert (T01) oder einen zweiten Zeitwert (T02) zuweisen.

8. Kommunikationsgerät (2) nach Anspruch 7, wobei das Überwachungsmittel (16) weiterhin dazu ausgestaltet ist, das die Zuweisung des zweiten Zeitwertes (T02) eine aufeinanderfolgende Anzahl von Wiederholungen nicht überschreitet.

9. Kommunikationsgerät (1) nach einem der Ansprüche 7 oder 8, weiter umfassend ein Ermittlungsmittel (19), welches dazu ausgestaltet ist den zweiten Zeitwert (T02) aus Systeminformationen zu errechnen.

10. Kommunikationsgerät (1) nach Anspruch 9, ausgestaltet mit Prognosemittel (18) zur Prognose eines Wechsels von einem ersten Betriebszustand in einen zweiten Betriebszustand mit welchem das Anforderungssignal (20) erzeugbar ist.
